**Europäisches Patentamt**

**European Patent Office**

**Office européen des brevets**

(19)

(11) Veröffentlichungsnummer: **0 070 546**
**B1**

(12) # EUROPÄISCHE PATENTSCHRIFT

(45) Veröffentlichungstag der Patentschrift:
**15.10.86**

(51) Int. Cl.⁴: **B 03 B 9/06, C 10 L 5/46**

(21) Anmeldenummer: **82106463.1**

(22) Anmeldetag: **17.07.82**

(54) **Verfahren zur Aufbereitung der zu brikettierenden brennbaren Fraktion von Hausmüll und Anlage zur Durchführung des Verfahrens.**

(30) Priorität: **18.07.81 DE 3128560**

(43) Veröffentlichungstag der Anmeldung:
**26.01.83 Patentblatt 83/4**

(45) Bekanntmachung des Hinweises auf die Patenterteilung:
**15.10.86 Patentblatt 86/42**

(84) Benannte Vertragsstaaten:
**AT BE CH DE FR GB IT LI LU NL SE**

(56) Entgegenhaltungen:
**CH-A-331 132**
**DE-C-707 876**
**FR-A-2 060 766**
**GB-A-18 736**
**US-A-4 026 678**

(73) Patentinhaber: **MANNESMANN VEBA UMWELTTECHNIK GMBH, Südstrasse 41, D-4690 Herne 2 (DE)**

(72) Erfinder: **Riemann, Hanns-Helmut, Schattbachstrasse 26, D-4630 Bochum (DE)**
Erfinder: **Sonnenschein, Hans, Hatzperbogen 48, D-4300 Essen (DE)**

(74) Vertreter: **Meissner, Peter E., Dipl.-Ing., Patentanwälte Dipl.-Ing. Peter E. Meissner Dipl.-Ing. Hans-Joachim Presting Herbertstrasse 22, D-1000 Berlin 33 (DE)**

LIBER, STOCKHOLM 1986

### Beschreibung

Die Erfindung betrifft ein Verfahren mit den Merkmalen des Oberbegriffs von Anspruch 1.

Bei einem derartigen bekannten Verfahren (Aufbereitungs-Technik, Jahrgang 1960, Seiten 153 - 163), bei dem der in einer Hammermühle zerkleinerte Hausmüll in einem Schwebetrockner von Schwerstoffen befreit getrocknet wird, wird die so herausgetrennte brennbare Fraktion ohne Nachbehandlung der Brikettpresse zugeführt. Die Bindung der Teilchen beim Brikettieren kommt zum geringeren Teil durch die bei der Zerkleinerung in der Hammermühle entstehenden faserigen Ränder der zellstoffreichen Teilchen wie Papierfetzen, sondern zum größeren Teil durch die den Schwebetrockner nach oben hin in erheblicher Menge passierenden flugfähigen Feininertteilchen zustande. Den Feininertteilchen kommt die wesentlichere Bindekraft deshalb zu, weil die im feuchten Urzustand des Mülls erzeugten faserigen Ränder der zellstoffreichen Teilchen so weich sind, daß sie auf dem Förderweg zum Schwebetrockner hin und im Schwebetrockner selbst mechanisch abgestumpft, die Ränder also großenteils geglättet werden. Die so hergestellten Briketts haben wegen des Feininertanteils einen nur mäßigen Heizwert.

Die Eigenschaft von Feininertteilchen, als Bindemittel zu wirken, ist noch deutlicher bei einem anderen bekannten Verfahren (DE-PS 25 10 465), bei dem nach einer Grobzerkleinerung des Hausmülls der gesamte Inertanteil beim Durchgang durch eine Zerfaserungsmaschine in der Fördermasse verbleibt und zusammen mit dem zerfaserten Material getrocknet wird. Eine herausgetrennte brennbare Fraktion ist dort nicht vorhanden. Folglich haben die zwar ohne zusätzlich beigemischte Bindemittel so hergestellten Briketts einen solch niedrigen Heizwert, daß sie sich kaum zur Verbrennung eignen, sondern zur Vergasung in einem Gasgenerator vorgesehen sind. Dieses andere Verfahren liegt außerhalb der durch den Oberbegriff des Anspruchs 1 bezeichneten Gattung.

Aus der gattungsbildenden CH-A 331 132 ist schließlich ein Verfahren zur Aufbereitung von Stadtmüll zwecks Verwertung als Brennmaterial oder als Kompost bekannt. Hierbei wird der Müll zunächst gesiebt, sodann zerkleinert und anschließend werden aus diesem Material Formlinge ohne jedes zusätzliche Bindemittel gepreßt. Nach der Zerkleinerung und vor der Pressung kann auch noch eine Nachsiebung erfolgen. Die auf diese Weise hergestellten Briketts weisen ebenfalls einen vergleichsweise niedrigen Heizwert auf, da sie nicht brennbare Anteile in der Mischung enthalten.

Die Erfindung bezweckt, die von Schwerstoffen befreite und getrocknete brennbare Fraktion des Hausmülls so aufzubereiten, daß ohne Zugabe von Bindemitteln transportfeste und lagerfeste Briketts relativ hohen Heimwertes herstellbar sind. Zur Lösung dieser Aufgabe sieht die Erfindung die Merkmale des kennzeichnenden Teils von Anspruch 1 vor.

Die Aussiebung des Feininertmaterials und die Zerfaserung des zellstoffreichen Materials im Trockenzustand bedingen einander, wie in der anschließenden Beschreibung eines Beispieles begründet wird.

Wegen der alleinigen Bindefähigkeit zellstoffreichen Materials aufgrund der Zerfaserung im Trockenzustand wirken sich nicht fasernde Kunststoffteilchen, die in der Masse eingemengt sind, störend aus. Dies auch schon deshalb, weil Kunststoffolien die Zerfaserungsmaschine in weit größerer Stückgröße verlassen, als z.B. nur millimetergroße Papierfetzen. In zweckmäßiger Weiterbildung sieht die Erfindung daher das Merkmal von Anspruch 2 vor.

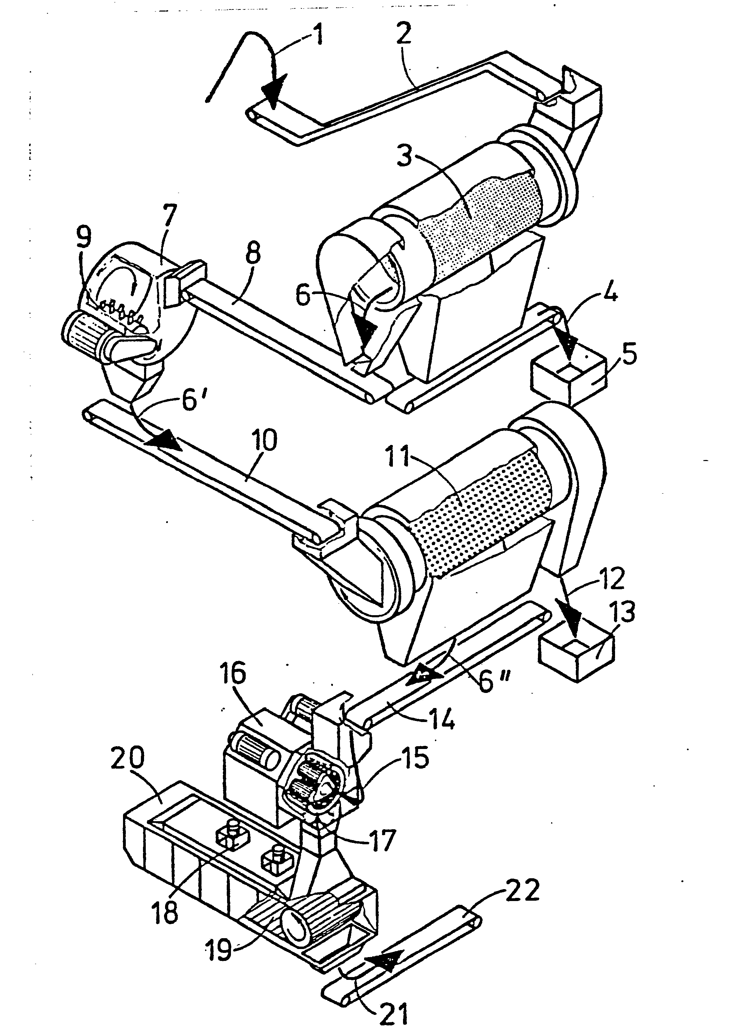

In der Zeichnung ist eine Anlage zur Durchführung des erfindungsgemäßen Verfahrens als Ausführungsbeispiel dargestellt. Die im weiteren erläuterte Zeichnung zeigt eine Anlage zur Aufbereitung und Brikettierung der brennbaren Fraktion von Hausmüll.

Eine Schüttmasse 1 wird kontinuierlich einem aufwärts führenden Förderband 2 übergeben. Die Schüttmasse 1 besteht aus Hausmüll, der zuvor eine Grobzerkleinerung und Aussonderung von Schwermaterial wie Metallteile, Steine, Glasteile u. a. erfahren hat. Sie hat auch einen Trockner durchlaufen und weist eine Restfeuchte möglichst von 8 bis 10 % auf. Die Schüttmasse 1 läßt sich daher als getrocknete brennbare Fraktion von zerkleinertem Hausmüll bezeichnen.

Vom Band 2 gelangt die Schüttmasse in eine Feinsiebtrommel 3, in der Feininertmaterial wie Asche abgesondert wird. Gemäß dem Pfeil 4 fällt das Feininertmaterial in einen symbolisch angedeuteten Container 5. 6 ist demnach die von Feinmaterial befreite, getrocknete brennbare Fraktion des Hausmülls. Sie besteht im wesentlichen aus zellstoffreichem Material wie Papier, Speisereste und Kunststoffolien.

Die Fraktion 6 wird einem zu einer Zerfaserungsmaschine 7 führenden Band 8 aufgegeben. Die Zerfaserungsmaschine besitzt eine rasch rotierende Walze 9, die mit scharfen Werkzeugen bestückt ist.

Die Zerfaserung des zellstoffreichen Materials im Trockenzustand führt zu Fetzen von einem oder einigen Millimetern Größe. Die Ränder sind faserig, wobei die Fasern wegen des Trockenzustandes widerstandsfest genug sind, auf dem weiteren Transportweg großenteils erhalten zu bleiben.

Die weitere Behandlungsstation der jetzt zerfaserten Fraktion 6′ auf dem Wege über das Band 10 ist eine Grobsiebtrommel 11, in der die in der Zerfaserungsmaschine zwar zerrissenen aber immer noch großflächigen Kunststoffolienteile zurückgehalten werden und gemäß Pfeil 12 in einen Container 13 fallen. Die jetzt praktisch kunststoffreie Fraktion 6″ wird über ein Band 14 einer gemäß Pfeil 15 als axial beschickbare Kollergangpresse ausgebildete Brikettpresse 16 zugeführt. Deren ringförmige, langsam rotierende Matrize 17 ist mit einer Vielzahl Lochkaliber von beispielsweise 20 mm Durchmesser versehen.

Bei dem in der Größenordnung von etwa 300 bar liegenden Kompressionsdruck der Masse und einer Temperatur von 100 °C oder mehr werden die faserigen Fetzen durch Reibung oberflächenrauh. Aufrauhung und Verzahnung der faserigen Ränder allein bewirken einen solch festen Zusammenschluß der Masse, daß die aus der Matrize radial austretenden Brikettstränge etwa durch Wandberührung in Brikettstücke von 50 bis 100 mm Länge abbrechen.

Die gezielt belassene Restfeuchte dampft dabei teilweise aus, aber so wenig intensiv, daß beim raschen Druckabbau, der beim Austritt aus den Matrizenlöchern auftritt, keine die Strangfestigkeit mindernde Expansionsblasen entstehen.

In einem mit Lüftern 18 und einem Band 19 versehenen Kühlkasten 20 erhalten die Briketts nahezu die Raumtemperatur und werden entsprechend Pfeil 21 auf einem Band 22 aus der beschriebenen Aufbereitungsstrecke ausgetragen.

Je besser die Aussiebung des Feininertmaterials und der Kunststoffolien ist, um so wirksamer verfilzen die im Trockenzustand erzeugten faserigen Ränder miteinander. Soweit nämlich in der zu brikettierenden Masse das Feininertmaterial nicht wie bisher in größerem Mengenanteil vorhanden ist, wirkt es nicht bindend, sondern eher bindehemmend. Das ist eine gegenseitige Bedingung zum Erhalt fester Briketts relativ hohen Heizwertes. Bindemittel wie mit der Masse mitgeschlepptes Inertmaterial mindern den Heizwert, und zusätzlich eingemischte brennbare Bindemittel verteuern die Briketts.

**Patentansprüche**

1. Verfahren zum Aufbereiten der auf möglichst 8 bis 10 % Restfeuchte getrockneten brennbaren Fraktion von Hausmüll, wobei der Hausmüll zunächst einer Grobzerkleinerung und einer Abtrennung der Schwermaterialien unterworfen wird und anschließend eine Feinsiebung erfolgt, dadurch gekennzeichnet, daß die brennbare Fraktion nach dem Heraussieben der nicht brennbaren Feinanteile im Trockenzustand zerfasert wird.

2. Verfahren nach Anspruch 1, dadurch gekennzeichnet, daß nach der Zerfaserung Kunststoffteilchen ausgesiebt werden.

3. Anlage zur Durchführung des Verfahrens nach Anspruch 2, dadurch gekennzeichnet, daß sie im Anschluß an einen Trockner ein Feinsieb (3), eine Zerfaserungsmaschine (7) und ein Grobsieb (11) aufweist.

**Claims**

1. Method for the preparation of the combustible fraction of household refuse, dried as far as possible to 8 to 10% residual moisture, in which the household refuse is firstly subjected to a coarse crushing and a separation of the heavy materials, and then a fine screening takes place, characterized in that after the screening out of the non-combustible fine components, the combustible fraction is shredded to fibres in dry state.

2. Method according to Claim 1, characterized in that after the shredding to fibres, particles of synthetic material are screened out.

3. Installation to carry out the method according to Claim 2, characterized in that connected to a drier, there is a fine screen (3), a shredding machine (7) and a coarse screen (11).

**Revendications**

1. Procédé de traitement de la fraction combustible séchée à une humidité résiduelle le plus possible de 8 à 10 % d'ordures ménagères, dans lequel les ordures ménagères subissent tout d'abord un broyage grossier et une séparation des matériaux denses et dans lequel, par la suite, se produit un tamisage fin, caractérisé en ce que la fraction combustible est effilochée à l'état sec après l'élimination par tamisage des composants fins non combustibles.

2. Procédé selon la revendication 1, caractérisé en ce que, après l'effilochage, les particules de matière synthétique sont tamisées.

3. Installation pour la mise en oeuvre du procédé selon la revendication 2, caractérisé en ce qu'elle comprend faisant suite à un séchoir, un tamis fin (3), une machine d'effilochage (7) et un tamis grossier (11).